# EUROPEAN PATENT APPLICATION

(11) **EP 3 203 222 A1**
(43) Date of publication of application: **09.08.2017**
(21) Application number: 17153715.2
(22) Date of filing: 30.01.2017
(51) Int. Cl.: G01N 27/407, G01N 33/00, F02C 9/00

(54) **SYSTEMS AND METHODS FOR NOX MEASUREMENT AND TURBINE CONTROL**

(30) Priority: 03.02.2016 US 201615014772
(71) Applicant: General Electric Company, Schenectady, NY 12345 (US)
(72) Inventor: MIRANDA, Carlos Miguel, Schenectady, NY 12345 (US); TRALSHAWALA, Nilesh, Greenville, SC 29615 (US)
(74) Representative: Lee, Brenda

(57) **Abstract**

Systems and methods for NOx measurement and turbine control are provided. According to one embodiment of the disclosure, a method (900) for NOx measurement and turbine control can include receiving (905) a signal from at least one electrochemical NOx sensor (120) mounted in a gas flow path (110) of a turbine (105). Based at least in part on the received signal, a NOx emission value associated with a gas flow in or from the turbine (105) can be determined (910). Based at least in part on the determined NOx emission value, a control action for the turbine (105) can be determined (915). The method further comprises facilitating (920) the control action for the turbine (105).

## Description

### TECHNICAL FIELD

This disclosure relates to turbines, and more particularly, to systems and methods for NOx measurement and turbine control.

### BACKGROUND OF THE DISCLOSURE

Turbine emissions, in the form of nitrogen oxides (NOx), can be monitored during the operation of a turbine. NOx emissions from a turbine can be an indicator of efficiency and health of various components of the turbine. Accurate measurement of NOx can, for example, indicate turbine inefficiencies caused by can-to-can variations in combustors. In addition, accurate NOx measurement can be used to control the turbine and its emissions.

Conventional NOx monitoring systems can use gas analyzers and are primarily used for closed loop emissions control. Gas analyzers and other NOx monitoring systems typically depend on gas sampling and do not provide for real-time control of the turbine and its emissions. In addition, conventional gas analyzers and other NOx monitoring systems may not provide NOx measurement at the combustor can level, which may be used to assess combustor can-to-can variations as well as other events, such as, for example, a lean blow out (LBO) event in a combustor.

### BRIEF DESCRIPTION OF THE DISCLOSURE

Embodiments of the disclosure are generally directed to systems and methods for NOx measurement and turbine control. According to one example embodiment of the disclosure, a method for NOx measurement and turbine control can include receiving a signal from at least one electrochemical NOx sensor mounted in a gas flow path of a turbine. Based at least in part on the received signal, a NOx emission value associated with a gas flow in or from the turbine can be determined. Based at least in part on the determined NOx emission value, a control action for the turbine can be determined. The method can further include facilitating the control action for the turbine.

According to another example embodiment of the disclosure, a system for NOx measurement and turbine control can include a controller. The system can also include a memory with instructions executable by a computer for performing operations that can include, receiving a signal from an array of electrochemical sensors mounted in a gas flow path of a turbine, based at least in part on the signal, determining a NOx emission value for the gas flow path of the turbine, based at least in part on the determined NOx emission value, determining a control action for the turbine, and facilitating the control action for the turbine.

According to another example embodiment of the disclosure, a system for NOx measurement and turbine control can include a turbine component, and a controller. The system can also include a memory with instructions executable by a computer for performing operations that can include, transmitting a signal from at least one electrochemical NOx sensor mounted adjacent to the turbine component in a gas flow path component of a turbine, based at least in part on the signal, determining a NOx emission value for the turbine component or the turbine, based at least in part on the determined NOx emission value, determining a control action for the turbine component or the turbine, and facilitating the control action.

Other embodiments and aspects of the disclosure will become apparent from the following description taken in conjunction with the following drawings.

### BRIEF DESCRIPTION OF THE DRAWINGS

Having thus described the disclosure in general terms, reference will now be made to the accompanying drawings, which are not necessarily drawn to scale, and wherein:
FIG. 1 illustrates an example system environment for NOx measurement and turbine control in accordance with certain embodiments of the disclosure.
FIG. 2A and FIG. 2B illustrate an example system environment in accordance with certain embodiments of the disclosure.
FIG. 3 illustrates an example electrochemical NOx sensor mounted with respect to a gas flow path in accordance with certain embodiments of the disclosure.
FIG. 4A and FIG. 4B illustrate example architecture and housing configurations for an electrochemical NOx sensor in accordance with certain embodiments of the disclosure.
FIG. 5A and FIG. 5B illustrate example transmission options for an example electrochemical NOx sensor in a gas flow path in accordance with certain embodiments of the disclosure.
FIG. 6 illustrates example gas flow path components, and example locations and configurations of electrochemical NOx sensors in the gas flow path in accordance with certain embodiments of the disclosure.
FIG. 7 illustrates an example configuration of electrochemical NOx sensors in an exhaust diffuser of a turbine in accordance with certain embodiments of the disclosure.
FIG. 8 illustrates an example computer system configured for NOx measurement and turbine control in accordance with certain embodiments of the disclosure.
FIG. 9 illustrates an example flowchart of a method for NOx measurement and turbine control in accordance with certain embodiments of the disclosure.

### DETAILED DESCRIPTION OF THE DISCLOSURE

The disclosure now will be described more fully hereinafter with reference to the accompanying drawings, in which example embodiments of the disclosure are shown. This disclosure may, however, be embodied in many different forms and should not be construed as limited to the example embodiments set forth herein; rather, these example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. Like numbers refer to like elements throughout.

Generally, certain embodiments of the systems and methods described herein are directed to NOx measurement and turbine control. In some example implementations, certain technical effects and/or solutions can be realized, wherein NOx measurement may be used to identify inefficiencies in various turbine operations and associated turbine components. Once certain inefficiencies are identified, the turbine control system can adjust various turbine operating parameters to reduce and/or minimize the inefficiencies, thereby improving turbine performance. In other example embodiments, NOx measurement may be used in a closed loop DeNOx system to reduce the turbine emission level before exhaust gases are released to the atmosphere.

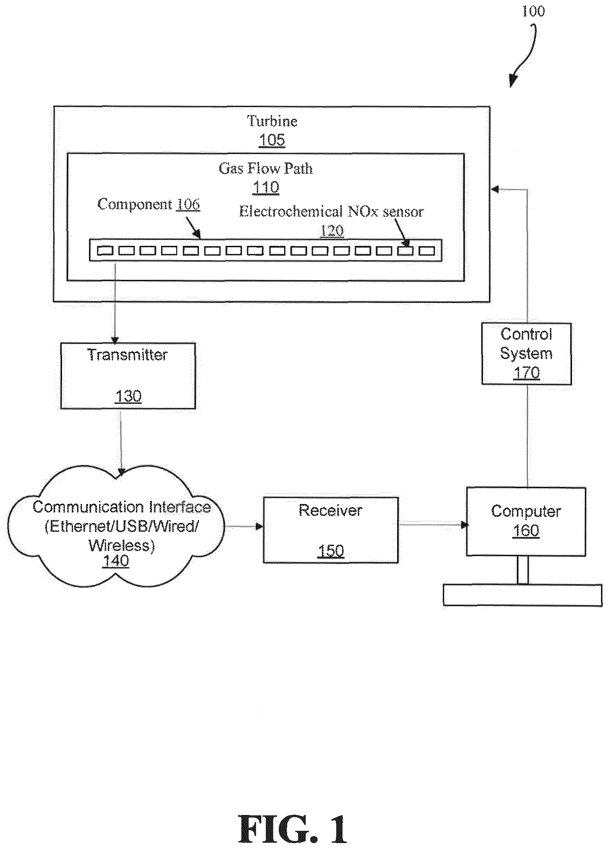

Referring now to FIG. 1, a block diagram illustrates an example system environment 100 for implementing certain systems and methods for NOx measurement and turbine control in accordance with an example embodiment. The system environment 100 may include a turbine 105 that can, for example, be a gas turbine. The turbine 105 can include one or more turbine components 106 and a gas flow path 110. The one or more turbine components can include, but may not be limited to, a combustor can, a turbine stator, an exhaust strut, or an exhaust diffuser. The system 100, according to an embodiment of the disclosure can further include at least one electrochemical NOx sensor 120, a transmitter 130, a communication interface 140, a receiver 150, a computer 160, and a control system 170.

As shown in FIG. 1, at least one electrochemical NOx sensor 120 can be mounted to at least one component 106 in the gas flow path 110 of the turbine 105. The at least one electrochemical NOx sensor 120 can include potentiometric-type sensors, mixed potential-type sensors, amperometric-type sensors, or impedancemetric-type sensors. Potentiometric-type sensors can generate voltages in response to a NOx concentration. Example potentiometric-type sensors can use electrolytes such as, for example, beta alumna, gallium oxide, or yttria-stabilized zirconia (YSZ) that can conduct an ion of the species to be detected. Mixed potential-type sensors can be based on non-equilibrium electrode reactions. Example mixed potential-type sensors can use electrodes such as, for example, WO3, NiO, ZnO, Cr₂O₃, V₂O₅ or indium-doped tin oxide (ITO). Amperometric-type sensors can operate based on an electrode reaction induced by an applied potential and the resulting current can be measured. Example amperometric-type sensors can use electrolytes such as, for example, doped lanthanum gallate, YSZ, or NASICON. Impedancemetric-type sensors can operate by measuring a current generated by an oscillating voltage applied across a set of electrodes. Example impedancemetric-type sensors can use electrodes such as, for example, ZnCr₂O₄, or LaFeO₃.

In any instance, the at least one electrochemical NOx sensor 120 can communicate with a transmitter 130. In certain embodiments, the transmitter 130 can be a surface acoustic wave (SAW) type with a piezoelectric substrate. In another embodiment, the transmitter 130 can be of direct-write type that includes a printed sensor with a dielectric mounted on the substrate of at least one component 106 in the gas flow path 110. In certain embodiments, the transmitter 130 and electrochemical NOx sensor 120 can be a single entity of an integral sensor-transmitter type.

The transmitter 130 can receive a signal from the at least one electrochemical NOx sensor 120 and transmit a corresponding signal to an associated receiver 150. The transmitter 130 can be communicatively coupled to the receiver 150 via a communication interface 140, which can be any of one or more communication networks such as, for example, an Ethernet interface, a Universal Serial Bus (USB) interface, or a wireless interface. In certain embodiments, the receiver 150 can be coupled to the transmitter 130 by way of a hard wire or cable, such as, for example, an interface cable. In other embodiments, the receiver 150 can be coupled to the transmitter 130 by way of a wireless interface, such as, for example, a radio-frequency (RF) signal interface, a passive wireless technology, and so forth.

The computer 160 can be a computer system having one or more processors that can execute computer-executable instructions to control the operation of the electrochemical NOx sensors 120, transmitter 130, and/or receiver 150. The computer 160 can further provide inputs, gather transfer function outputs, and transmit instructions from any number of operators and/or personnel.

The computer 160 can also include software and hardware for the correlation of the signal received at the receiver 150 to a NOx value. The computer 160 can further provide the NOx value to the control system 170, from which the control system 170 can perform various control actions to reduce emissions, change combustor firing rates, and so forth. In some embodiments, the receiver 150 may be part of the computer 160. In some other embodiments, the computer 160 may determine control actions to be performed based on the NOx value. In other instances, the computer 160 can be an independent entity communicatively coupled to the receiver 150. In other embodiments, the computer 160 and the control system 170 may be a single entity.

In accordance with an embodiment of the disclosure, a system for NOx measurement and turbine control may include a controller, for example, the control system 170 as indicated in FIG. 1. The computer 160 can include a memory that can contain computer-executable instructions capable of receiving a signal from the array of electrochemical NOx sensors 120 mounted on one or more components 106 in the gas flow path 110 of the turbine 105. Based at least in part on the signal, a NOx emission value can be determined. The determined NOx emission value can be that of the turbine or a turbine component 106. Based at least in part on the NOx emission value, a control action for the turbine 105 can be determined. Furthermore, the determined control action for the turbine 110 can be performed by or otherwise implemented by the control system 170. The computer 160 can utilize any number of software and/or hardware to correlate the signal received from the at least one electrochemical NOx sensor to a NOx emission value. Using this information, the computer 160 and the control system 170 can determine appropriate suitable control action to be performed by the turbine 105, such as, for example, adjusting the combustor fuel-to-air ratio to achieve a lower NOx value.

The determination of a control action can include performing one of a deterministic analysis or a probabilistic analysis. For example, in a deterministic analysis, the measured NOx emission value (NOx1) of the gas flow path 110 and a power of the turbine 105 in megawatts (MW1) can be compared against a NOx emission value (NOx2) and power of the turbine 105 in megawatts (MW2) predicted by a turbine performance tool. The control action can be determined based on a difference between the turbine powers, MW1 and MW2, and a difference in the NOx emission values, NOx1 and NOx2.

In another embodiment, the control action can be determined using a probabilistic analysis. In a probabilistic analysis, for example, the turbine 105 may be instructed to operate at a specific design point for the type of turbine and a specific ambient condition. The NOx emission value (NOx1) and a power of the turbine (MW1) can be determined for this state of the turbine 105. The operating condition of the turbine 105 can be adjusted based on the power difference between actual power (MW1) and a probabilistic power (MW2) for the same type of turbine 105 operating at the same ambient condition. The probabilistic power (MW2) can be determined by performing a probability distribution analysis on operating and theoretical power data collected from several of the same type of turbine at the same ambient condition. The turbine 105 can be adjusted to the probabilistic power (MW2) to determine a second NOx emission value (NOx2). The operating condition of the turbine 105 can be further adjusted based on the difference between the second NOx emission value (NOx2) and a probabilistic NOx emission value (NOx3) for the same type of turbine operating at the same ambient condition. The probabilistic NOx emission value (NOx3) can be determined by performing a probability distribution analysis on operating and theoretical NOx data collected from several of the same type of turbine at the same ambient condition. Based on the difference between NOx3 and NOx2 values, a new power (MW3) can be derived. Based on the differences between NOx3 and NOx2 and further between MW2 and MW3, a size of an adjustment factor can be determined that can then be input into the control system 170 to facilitate the control action for the turbine 105.

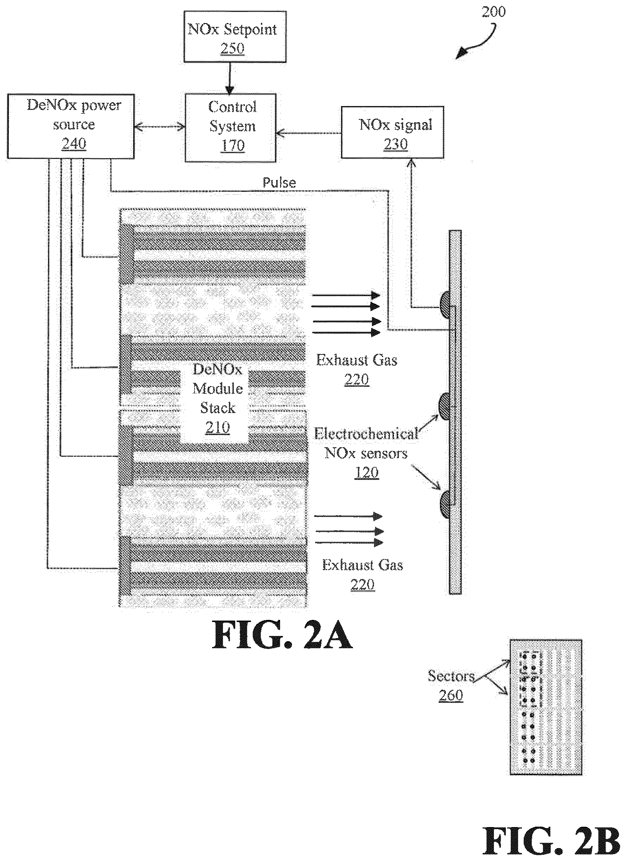

Referring now to FIG. 2A, in accordance with an embodiment of the disclosure for implementing certain systems and methods for NOx measurement and turbine control, an example system environment 200 can include a DeNOx module stack 210, electrochemical NOx sensors 120, a control system 170, and a DeNOx power source 240. As shown, an exhaust gas 220, generated by a turbine, and passing through the DeNOx module stack 210 may still contain certain amounts of NOx that can be measured by the electrochemical NOx sensors 120. The electrochemical NOx sensors 120 can provide a NOx signal 230 to the control system 170 that can facilitate a closed loop control of NOx emissions in the exhaust gas 220. The DeNOx module stack 210 can control the amount of NOx emission in the exhaust gas 220. For example, the DeNOx module stack can provide ammonia injection to control the amount of NOx emission in the exhaust gas 220. The DeNOx power source 240 can provide power to the DeNOx module stack and the electrochemical NOx sensors 120. In the closed loop control of NOx emissions, the control system 170 can compare a NOx set point 250 to the NOx signal 230 from the electrochemical NOx sensors 120. Based on the difference between the NOx set point 250 and the NOx signal 230, the control system 170 can direct the DeNOx power source 240 to activate the DeNOx module stack to control the amount of NOx emission in the exhaust gas 220.

Referring now to FIG. 2B, an example sectional view of the electrochemical NOx sensors 120 is shown, where the electrochemical NOx sensors 120 can be arranged in one or more sectors 260. The one or more sectors 260 can correspond with one or more individual and/or groups of electrochemical NOx sensors 120. The one or more sectors 260 can facilitate mapping of NOx concentration along the flow path of the exhaust gas 220. The mapping of NOx concentration can in turn enable identification of inefficiencies and anomalies in the turbine.

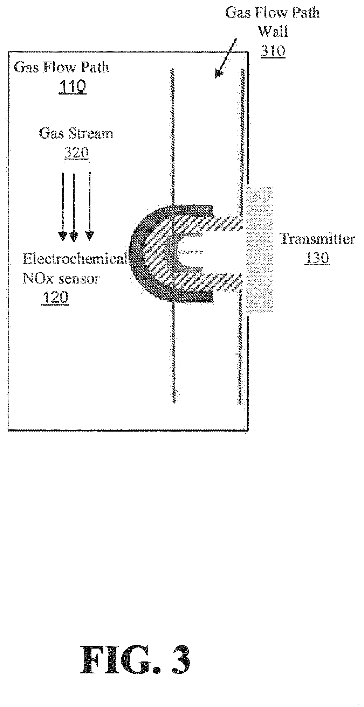

Attention is now drawn to FIG. 3, which illustrates an example electrochemical NOx sensor 120 mounted with respect to a gas flow path 110 in a turbine according to an embodiment of the disclosure. For example, the electrochemical NOx sensor 120 can be mounted to a turbine component, such as 106 in FIG. 1, within or adjacent to the gas flow path 110. A NOx sensing portion of the electrochemical NOx sensor 120 can be positioned in a gas stream 320 of the gas flow path 110, and an associated transmitter 130 can be mounted on an opposing side out of the gas stream 320, such as an opposing side of the turbine component 106 or on an opposing side of a gas flow path wall 310. In any instance, the electrochemical NOx sensor 120 can be in direct contact with the gas stream 320, and the associated transmitter 130 can be located away from or outside of the gas stream 320 to minimize exposure to any relatively high gas stream temperatures.

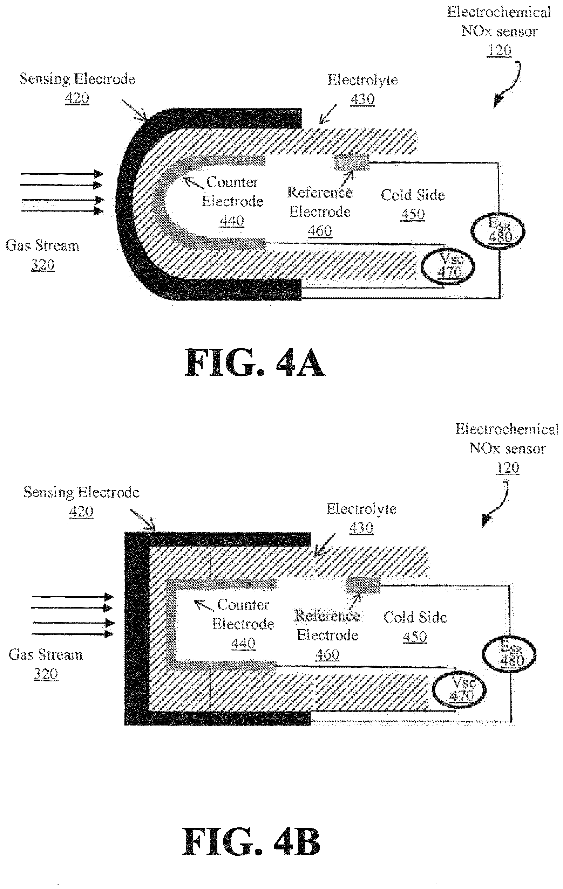

Referring now to FIG. 4A, an architecture for an electrochemical NOx sensor 120 is described in accordance with an embodiment of the disclosure. The electrochemical NOx sensor 120 shown can include a sensing electrode 420 in a gas stream 320, a counter electrode 440 and a reference electrode 460 on a relatively cold side 450, and an electrolyte 430 layer between the sensing electrode 420 and the counter electrode 440. Vsc 470 can indicate a measured potential difference between the sensing electrode 420 and the counter electrode 440, and E_{SR} 480 can indicate a measured potential difference between the sensing electrode 420 and the reference electrode 460. Based on the proportionality of an electrical signal to a gas species concentration, the potential differences Vsc 470 and E_{SR} 480 can be correlated to a NOx measurement.

Referring again to FIG. 4A, the electrochemical NOx sensor 120 can be located in a housing that conforms to a geometry of a turbine component 106. While FIG. 4A indicates a curved housing for the electrochemical NOx sensor 120 for a relatively curved geometry turbine component, FIG. 4B indicates an electrochemical NOx sensor 120 with a relatively flat geometry turbine component 106.

Depending on the shape of the turbine component 106 and/or configuration of the gas flow path 110 or gas stream 320, other conforming housing geometries for an electrochemical NOx sensor 120 can exist with other embodiments of the disclosure.

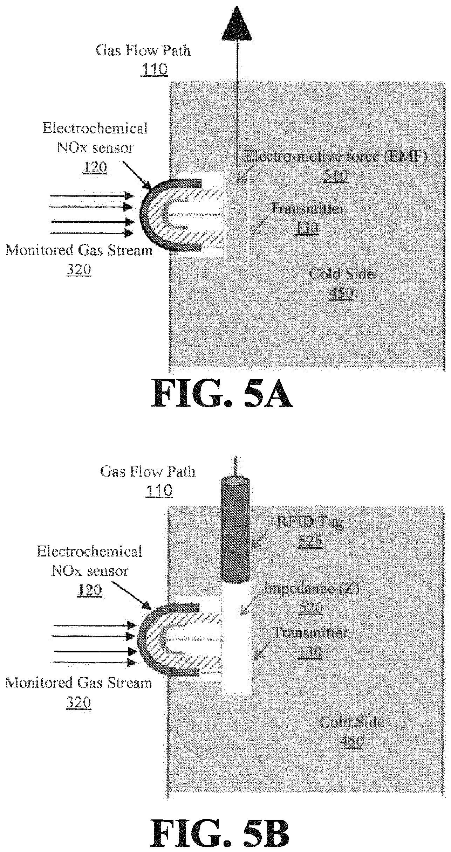

Attention is now drawn to FIG. 5A and FIG. 5B which illustrate different options for the communication interface, such as 140 of FIG. 1, according to various embodiments of the disclosure. FIG. 5A illustrates an electrochemical NOx sensor 120 in a gas stream 320 with an electro-motive force (EMF) 510 based on the potential differences described in the previous section. The EMF 510 can be transmitted out of the gas flow path 110 using a wired interface cable, and the signal can be pre-amplified outside the gas flow path 110. In another embodiment, the EMF 510 can be amplified inside the gas flow path 110 using suitable high temperature electronics, and then transmitted out of the gas flow path 110 using a wired interface cable.

FIG. 5B illustrates an electrochemical NOx sensor 120 in a gas stream 320 in a wireless configuration where an impedance (Z) 520 can be determined based on the potential differences described above. The impedance (Z) 520 can be transmitted wirelessly in two different configurations. In one example embodiment, the impedance (Z) 520 can be transmitted to modulate a transmitter 130, which may include a radio-frequency (RF) lumped resonator or a surface acoustic wave (SAW) sensor or otherwise may send a wireless signal to the receiver 150. In another embodiment, the impedance (Z) 520 can modulate a radio frequency identification (RFID) tag 525, which can be coupled to a radio-frequency (RF) antenna/transmitter for wireless communication with the receiver 150.

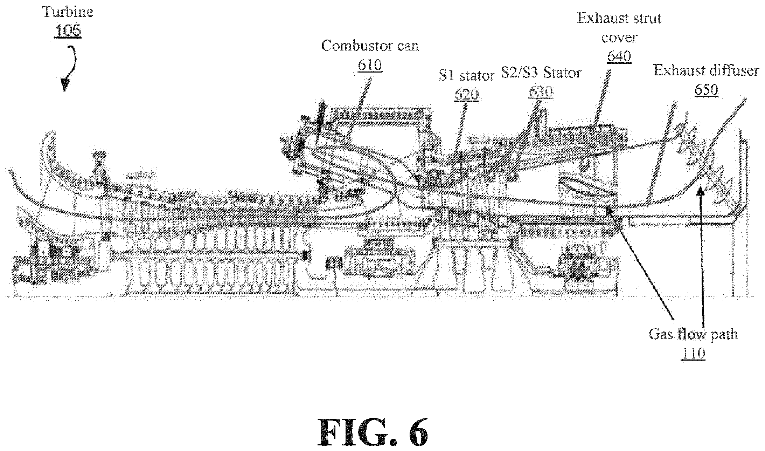

Referring now to FIG. 6, a cross-section of an example turbine is illustrated with example mounting locations for one or more electrochemical NOx sensors according to certain embodiments of the disclosure. As indicated, an electrochemical NOx sensor, such as 120, can be mounted along the gas flow path 110 in different locations, such as, in a combustor can 610, a stage 1 stator 620, a stage 2 or stage 3 stator 630, an exhaust strut cover 640, and/or an exhaust diffuser 650. Other suitable locations for mounting one or more electrochemical NOx sensors in a turbine are possible according to other embodiments of the disclosure.

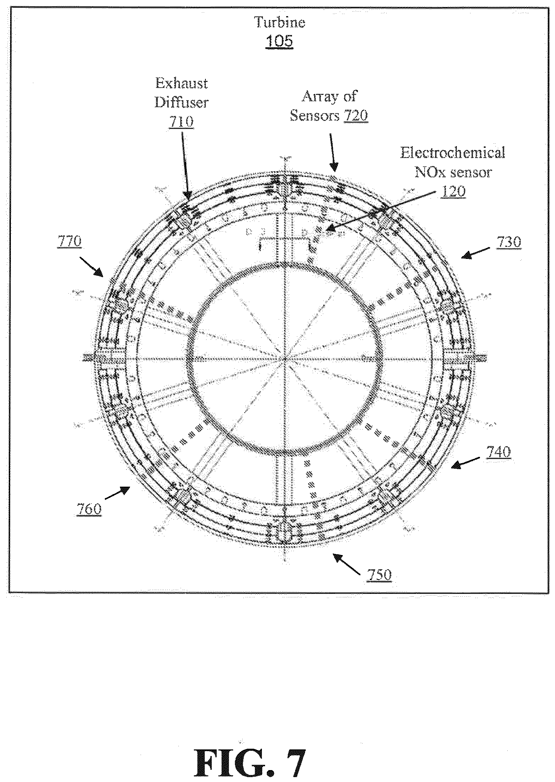

Referring now to FIG. 7, in another example embodiment of the disclosure, one or more electrochemical NOx sensors 120 can be mounted in sets of radial arrays of sensors in an exhaust diffuser 710 of a turbine, such as 105. In this embodiment, a respective array or set of electrochemical NOx sensors 720 can be mounted in an exhaust diffuser 710, wherein each electrochemical NOx sensor 120 can be radially spaced apart in relatively straight line outward from the center of the exhaust diffuser 710. Other sets of arrays 730, 740, 750, 760, 770 can be located throughout the exhaust diffuser 710, Depending on the shape of the exhaust diffuser 710 and/or configuration of the gas flow path or gas stream, any number of sets of electrochemical NOx sensors 120 can be arranged in the exhaust diffuser 710 in accordance with other embodiments of the disclosure. An arrangement of electrochemical NOx sensors 120, as illustrated in FIG. 7, can facilitate spatial mapping of NOx concentration at a variety of radial and circumferential locations. Such spatial mapping can in turn enable measurement of relatively hot gas swirl patterns and identification of combustion anomalies. Thus, in certain embodiments, one or more NOx emission values associated with the gas flow in or from the turbine can be determined from the electrochemical NOx sensors 120. One or more spatial variations in the NOx emission values can be measured, and based at least in part of the measured one or more spatial variations, one or more combustion anomalies can be identified.

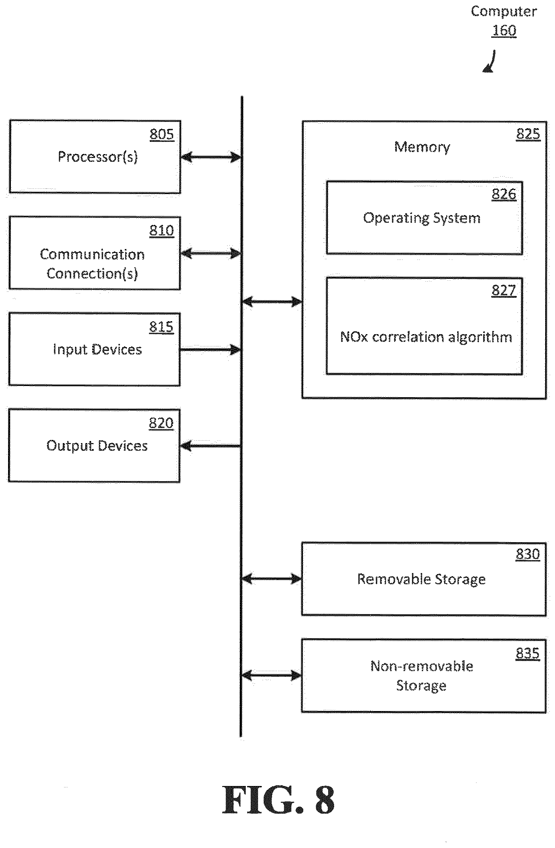

Attention is now drawn to FIG. 8, which illustrates an example computer system 160 configured for implementing certain systems and methods for NOx measurement and turbine control in accordance with certain embodiments of the disclosure. The computer system can include a processor 805 for executing certain operational aspects associated with implementing certain systems and methods for NOx measurement and turbine control in accordance with certain embodiments of the disclosure. The processor 805 can be capable of communicating with a memory 825. The processor 805 can be implemented and operated using appropriate hardware, software, firmware, or combinations thereof. Software or firmware implementations can include computer-executable or machine-executable instructions written in any suitable programming language to perform the various functions described. In one embodiment, instructions associated with a function block language can be stored in the memory 825 and executed by the processor 805.

The memory 825 can be used to store program instructions that are loadable and executable by the processor 805, as well as to store data generated during the execution of these programs. Depending on the configuration and type of the computer system 160, the memory 825 can be volatile (such as random access memory (RAM)) and/or non-volatile (such as read-only memory (ROM), flash memory, etc.). In some embodiments, the memory devices can also include additional removable storage 830 and/or non-removable storage 835 including, but not limited to, magnetic storage, optical disks, and/or tape storage. The disk drives and their associated computer-readable media can provide non-volatile storage of computer-readable instructions, data structures, program modules, and other data for the devices. In some implementations, the memory 825 can include multiple different types of memory, such as static random access memory (SRAM), dynamic random access memory (DRAM), or ROM.

The memory 825, the removable storage 830, and the non-removable storage 835 are all examples of computer-readable storage media. For example, computer-readable storage media can include volatile and non-volatile, removable and non-removable media implemented in any method or technology for storage of information such as computer-readable instructions, data structures, program modules or other data. Additional types of computer storage media that can be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the devices. Combinations of any of the above should also be included within the scope of computer-readable media.

Computer system 160 can also include one or more communication connections 810 that can allow a control device (not shown) to communicate with devices or equipment capable of communicating with the computer system 160. The communication connection(s) 810 can include communication interface 140. The control device can include the control system 170. Connections can also be established via various data communication channels or ports, such as USB or COM ports to receive cables connecting the control device to various other devices on a network. In one embodiment, the control device can include Ethernet drivers that enable the control device to communicate with other devices on the network. According to various embodiments, communication connections 810 can be established via a wired and/or wireless connection on the network.

The computer system 160 can also include one or more input devices 815, such as a keyboard, mouse, pen, voice input device, gesture input device, and/or touch input device. It can further include one or more output devices 820, such as a display, printer, and/or speakers.

In other embodiments, however, computer-readable communication media can include computer-readable instructions, program modules, or other data transmitted within a data signal, such as a carrier wave, or other transmission. As used herein, however, computer-readable storage media do not include computer-readable communication media.

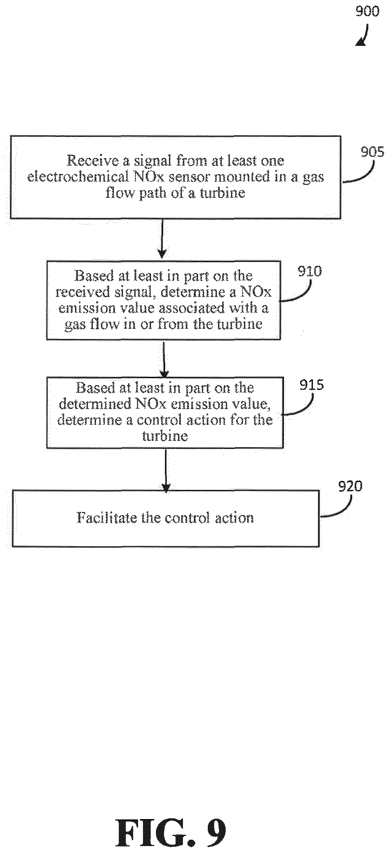

Turning to the contents of the memory 825, the memory 825 can include, but is not limited to, an operating system (OS) 826 and one or more application programs or services for implementing the features and aspects disclosed herein. Such applications or services can include a NOx correlation algorithm 827 for executing systems and methods for NOx measurement and control of a turbine 105 and its components. In one embodiment, the NOx correlation algorithm 827 can be implemented by software that is provided in configurable control block language and is stored in non-volatile memory. When executed by the processor 805, the NOx correlation algorithm 827 can implement the various functionalities and features associated with the computer system 160 described in this disclosure.FIG. 9 illustrates an example flowchart 900 of a method for NOx measurement and turbine control according to at least one embodiment of the disclosure. The flowchart 900 represents a series of operations that can be executed by the interaction of the various functional blocks shown in FIGs. 1, 2, and/or 8. More particularly, the flowchart 900 includes a block 905 representing an operation to receive a signal from at least one electrochemical NOx sensor 120 mounted in a gas flow path 110 of a turbine 105. In block 910, based at least in part on the received signal from the at least one electrochemical NOx sensor 120, a NOx emission value associated with a gas flow in or from the turbine 105 can be determined. In block 915, based at least in part on the determined NOx emission value, a control action for the turbine 105 can be determined. In block 920, the control action can be facilitated by way of the control system 170. In certain embodiments, a method can include determining a plurality of NOx emission values associated with the gas flow in or from the turbine; measuring a spatial variation in the plurality of NOx emission values, and based at least in part of the measured variation, identify one or more combustion anomalies.

References are made herein to block diagrams of systems, methods, and computer program products according to example embodiments of the disclosure. It will be understood that at least some of the blocks of the block diagrams, and combinations of blocks in the block diagrams, respectively, can be implemented at least partially by computer program instructions. These computer program instructions can be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed.

These computer program instructions can also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions can also be loaded onto a computer or other programmable data processing apparatus to cause a series of operational elements to be performed on the computer or other programmable apparatus to produce a computer implemented process such that the instructions that execute on the computer or other programmable apparatus provide elements for implementing the functions specified in the block or blocks.

One or more components of the systems and one or more elements of the methods described herein can be implemented through an application program running on an operating system of a computer. They also can be practiced with other computer system configurations, including hand-held devices, multiprocessor systems, microprocessor based, or programmable consumer electronics, mini-computers, mainframe computers, etc.

Application programs that are components of the systems and methods described herein can include routines, programs, components, data structures, etc. that implement certain abstract data types and perform certain tasks or actions. In a distributed computing environment, the application program (in whole or in part) can be located in local memory, or in other storage. In addition, or in the alternative, the application program (in whole or in part) can be located in remote memory or in storage to allow for circumstances where tasks are performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated the disclosure may be embodied in many forms and should not be limited to the example embodiments described above. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiments of the present invention are defined by the following numbered clauses:
1. A method, comprising:
   receiving a signal from at least one electrochemical NOx sensor mounted in a gas flow path of a turbine;
   based at least in part on the received signal, determining a NOx emission value associated with a gas flow in or from the turbine;
   based at least in part on the determined NOx emission value, determining a control action for the turbine; and
   facilitating the control action.
2. The method of clause 1, further comprising:
   determining a plurality of NOx emission values associated with the gas flow in or from the turbine; and
   measuring a spatial variation in the plurality of NOx emission values, and based at least in part of the measured variation, identifying one or more combustion anomalies.
3. The method of any preceding clause, wherein determining a NOx emission value associated with a gas flow in or from the turbine comprises:
   correlating the signal to the NOx emission value.
4. The method of any preceding clause, wherein determining the controls action for the turbine comprises performing a probabilistic analysis or deterministic analysis to determine a suitable control action.
5. The method of any preceding clause, wherein the at least one electrochemical NOx sensor comprises a housing that conforms to a geometry of a gas flow path component associated with the turbine.
6. The method of any preceding clause, wherein the at least one electro-chemical NOx sensor comprises at least one of the following: a potentiometric-type sensor, mixed potential-type sensor, amperometric-type sensor, or impedancemetric-type sensor.
7. The method of any preceding clause, wherein the gas flow path of the turbine comprises at least one of the following: a combustor can, a turbine stator, an exhaust strut, or an exhaust diffuser.
8. A system comprising:
   a controller; and
   a memory comprising computer-executable instructions operable to:
      receive a signal from an array of electrochemical sensors mounted in a gas flow path of a turbine;
      based at least in part on the signal, determine a NOx emission value for the gas flow path of the turbine;
      based at least in part on the NOx emission value, determine a control action for the turbine; and
      facilitate the control action for the turbine.
9. The system of any preceding clause, wherein the array of electrochemical sensors comprises at least one NOx sensor with a housing that conforms to a geometry of a gas flow path component in the turbine.
10. The system of any preceding clause, wherein the computer-executable instructions are further operable to:
   determine a plurality of NOx emission values associated with the gas flow in or from the turbine; and
   measure a spatial variation in the plurality of NOx emission values, and based at least in part of the measured variation, identify one or more combustion anomalies.
11. The system of any preceding clause, wherein the computer-executable instructions operable to determine a NOx emission value comprises computer-executable instructions operable to:
   correlate the signal to the NOx emission value.
12. The system of any preceding clause, wherein the computer-executable instructions to determine the controls action comprises computer-executable instructions operable to perform a probabilistic analysis or a deterministic analysis.
13. The system of any preceding clause, wherein the array of electrochemical sensors comprises at least one of a potentiometric-type sensor, mixed potential-type sensor, amperometric-type sensor, or impedancemetric-type sensor.
14. The method of any preceding clause, wherein the gas flow path of the turbine comprises at least one of the following: a combustor can, a turbine stator, an exhaust strut, or an exhaust diffuser.
15. A system, comprising:
   a turbine component;
   a controller; and
   a memory comprising computer-executable instructions operable to:
      transmit a signal from at least one electrochemical NOx sensor mounted adjacent to the turbine component in a gas flow path component of a turbine;
      determine, based at least in part on the signal, a NOx emission value for the turbine component or the turbine;
      based at least in part on the determined NOx emission value, determine a control action for the turbine component or the turbine; and
      facilitate the control action.
16. The system of any preceding clause, wherein the at least one electrochemical NOx sensor conforms to a geometry of the turbine component.
17. The system of any preceding clause, wherein the computer-executable instructions are further operable to:
   determine a plurality of NOx emission values associated with the gas flow in or from the turbine; and
   measure a spatial variation in the plurality of NOx emission values, and based at least in part of the measured variation, identify one or more combustion anomalies.
18. The system of any preceding clause, wherein the computer-executable instructions operable to determine the control action comprises computer-executable instructions operable to perform a probabilistic analysis or perform a deterministic analysis.
19. The system of any preceding clause, wherein the at least one electrochemical NOx sensor comprises at least one of a potentiometric-type sensor, mixed potential-type sensor, amperometric-type sensor, or impedancemetric-type sensor.
20. The system of any preceding clause, wherein the gas flow path component comprises at least one of a combustor can, a turbine stator, an exhaust strut, or an exhaust diffuser.

## Claims

1. A system (100), comprising:
a turbine component (106);
a controller (170); and
a memory (825) comprising computer-executable instructions operable to:
transmit a signal from at least one electrochemical NOx sensor (120) mounted adjacent to the turbine component (106) in a gas flow path (110) of a turbine (105), wherein the at least one electrochemical NOx sensor (120) conforms to a geometry of the turbine component (106);
determine, based at least in part on the signal, a NOx emission value for the turbine component (106) or the turbine (105);
based at least in part on the determined NOx emission value, determine a control action for the turbine component (106) or the turbine (105); and
facilitate the control action.

2. The system of claim 1, wherein the computer-executable instructions are further operable to:
determine a plurality of NOx emission values associated with the gas flow in or from the turbine (105); and
measure a spatial variation in the plurality of NOx emission values, and based at least in part of the measured variation, identify one or more combustion anomalies.

3. The system of claim 1 or 2, wherein the computer-executable instructions operable to determine the control action comprises computer- executable instructions operable to perform a probabilistic analysis or perform a deterministic analysis.

4. The system of claim 1, 2 or 3, wherein the at least one electrochemical NOx sensor (120) comprises at least one of a potentiometric-type sensor, mixed potential-type sensor, amperometric-type sensor, or impedancemetric-type sensor.

5. The system of any of claims 1 to 4, wherein the gas flow path (110) component comprises at least one of a combustor can, a turbine stator, an exhaust strut, or an exhaust diffuser.

6. A method (900), comprising:
receiving (905) a signal from at least one electrochemical NOx sensor (120) mounted in a gas flow path (110) of a turbine (105), wherein the at least one electrochemical NOx sensor (120) comprises a housing that conforms to a geometry of a gas flow path (110) component associated with the turbine (105);
based at least in part on the received signal, determining (910) a NOx emission value associated with a gas flow in or from the turbine (105);
based at least in part on the determined NOx emission value, determining (915) a control action for the turbine (105); and
facilitating (920) the control action.

7. The method of claim 6, further comprising:
determining a plurality of NOx emission values associated with the gas flow in or from the turbine (105); and
measuring a spatial variation in the plurality of NOx emission values, and based at least in part of the measured variation, identifying one or more combustion anomalies.

8. The method of claim 6 or 7, wherein determining a NOx emission value associated with a gas flow in or from the turbine (105) comprises:
correlating the signal to the NOx emission value.

9. The method of claim 6, 7 or 8, wherein determining the controls action for the turbine (105) comprises performing a probabilistic analysis or deterministic analysis to determine a suitable control action.

10. The method of any of claims 6 to 9, wherein the at least one electro-chemical NOx sensor (120) comprises at least one of the following: a potentiometric-type sensor, mixed potential-type sensor, amperometric-type sensor, or impedancemetric-type sensor.
